# EUROPEAN PATENT APPLICATION

(11) **EP 4 231 764 A1**
(43) Date of publication of application: **23.08.2023**
(21) Application number: 21880429.2
(22) Date of filing: 08.10.2021
(51) Int. Cl.: H04W 76/14, H04W 76/23, H04W 40/22, H04W 40/12, H04W 92/18

(54) **METHOD AND DEVICE FOR RELAY COMMUNICATION ON SIDELINK**

(30) Priority: 16.10.2020 US 202063092595 P
(71) Applicant: HYUNDAI MOTOR COMPANY, Seoul 06797 (KR); Kia Corporation, Seocho-gu Seoul 06797 (KR)
(72) Inventor: HAHN, Gene Back, Hwaseong-si, Gyeonggi-do 18280 (KR)
(74) Representative: Viering, Jentschura & Partner mbB Patent- und Rechtsanwälte
(86) International application number: PCT/KR2021/013921
(87) International publication number: WO 2022/080782

(57) **Abstract**

Disclosed are a method and device for relay communication on a sidelink. An operation method of a transmission terminal comprises the steps of: performing sidelink communication with a reception terminal; performing a connection configuration operation with a relay terminal, if SL relay communication is determined to be necessary; transmitting, to the reception terminal, a first message including connection configuration information for the SL relay communication; receiving, from the reception terminal, a second message indicating that a connection configuration between the reception terminal and the relay terminal is complete; and performing the SL relay communication with the reception terminal by means of the relay terminal.

## Description

### [Technical Field]

The present disclosure relates to a sidelink communication technique, and more particularly, to a technique for configuring a connection between terminals performing relay communications.

### [Background Art]

A fifth-generation (5G) communication system (e.g., New Radio (NR) communication system) which uses a frequency band higher than a frequency band of a fourth-generation (4G) communication system (e.g., Long Term Evolution (LTE) communication system or LTE-Advanced (LTE-A) communication system) as well as the frequency band of the 4G communication system has been considered for processing of wireless data. The 5G communication system can support Enhanced Mobile Broadband (eMBB) communications, Ultra-Reliable and Low-Latency communications (URLLC), massive Machine Type Communications (mMTC), and the like.

The 4G communication system and 5G communication system can support Vehicle-to-Everything (V2X) communications. The V2X communications supported in a cellular communication system, such as the 4G communication system, the 5G communication system, and the like, may be referred to as "Cellular-V2X (C-V2X) communications." The V2X communications (e.g., C-V2X communications) may include Vehicle-to-Vehicle (V2V) communications, Vehicle-to-Infrastructure (V2I) communications, Vehicle-to-Pedestrian (V2P) communication, Vehicle-to-Network (V2N) communication, and the like.

In the cellular communication systems, the V2X communications (e.g., C-V2X communications) may be performed based on sidelink communication technologies (e.g., Proximity-based Services (ProSe) communication technology, Device-to-Device (D2D) communication technology, or the like). For example, sidelink channels for vehicles participating in V2V communications can be established, and communications between the vehicles can be performed using the sidelink channels. Sidelink communication may be performed using configured grant (CG) resources. The CG resources may be periodically configured, and periodic data (e.g., periodic sidelink data) may be transmitted using the CG resources.

Meanwhile, sidelink communication between a transmitting terminal and a receiving terminal may be performed in a relay manner. Relay communication performed on sidelinks may be referred to as SL relay communication. For the SL relay communication, a connection configuration method between the transmitting terminal and a relay terminal and a connection configuration method between the receiving terminal and the relay terminal are required, but the above-described connection configuration methods have not been defined.

### [Disclosure]

### [Technical Problem]

The present disclosure is directed to providing a method and an apparatus for configuring connections between terminals performing SL relay communications.

### [Technical Solution]

An operation method of a transmitting terminal, according to a first exemplary embodiment of the present disclosure for achieving the above-described objective, may comprise: performing sidelink (SL) communication with a receiving terminal; in response to determining that SL relay communication is required, performing a connection configuration operation with a relay terminal; transmitting, to the receiving terminal, a first message including connection configuration information for the SL relay communication; receiving, from the receiving terminal, a second message indicating that connection configuration between the receiving terminal and the relay terminal has been completed; and performing the SL relay communication with the receiving terminal through the relay terminal.

When one or more preconfigured conditions are satisfied, the SL relay communication may be determined to be required, and the one or more preconfigured conditions may include at least one of a case when a number of negative acknowledgments (NACKs) received from the receiving terminal is p or more, a case when a channel quality between the transmitting terminal and the receiving terminal is equal to or less than a reference value, a case when an indicator requesting the SL relay communication is received from the receiving terminal, or a case when the SL relay communication is triggered by a base station.

The connection configuration operation between the transmitting terminal and the relay terminal may be performed when a base station indicates to enable the SL relay communication.

The performing of the connection configuration operation with the relay terminal may comprise: performing a measurement operation on signals received from one or more neighboring terminals; determining one neighboring terminal among the one or more neighboring terminals as the relay terminal based on a result of the measurement operation; and configuring a connection with the relay terminal.

The connection configuration information may include at least one of an identifier of the relay terminal, information indicating that connection configuration between the transmitting terminal and the relay terminal has been completed, or a number for identifying data last transmitted by the transmitting terminal.

The second message may include at least one of an identifier of the relay terminal, or information indicating that connection configuration between the receiving terminal and the relay terminal has been completed.

The first message may be a radio resource control (RRC) reconfiguration sidelink message or sidelink control information (SCI), and the second message may be an RRC reconfiguration complete sidelink message or SCI.

The operation method may further comprise releasing connection configuration between the transmitting terminal and the receiving terminal when the SL relay communication is performed.

An operation method of a receiving terminal, according to a second exemplary embodiment of the present disclosure for achieving the above-described objective, may comprise: performing sidelink (SL) communication with a transmitting terminal; receiving, from the transmitting terminal, a first message including connection configuration information for SL relay communication; performing a connection configuration operation with a relay terminal indicated by the connection configuration information; and transmitting, to the transmitting terminal, a second message including a result of the connection configuration operation.

The operation method may further comprise performing the SL relay communication with the transmitting terminal when the second message indicates that the connection configuration operation has been completed.

The operation method may further comprise performing the SL communication with the transmitting terminal without the relay terminal when the second message indicates that the connection configuration operation has failed.

The connection configuration operation between the receiving terminal and the relay terminal may be performed when the base station indicates to enable the SL relay communication.

The connection configuration information may include at least one of an identifier of the relay terminal, information indicating that connection configuration between the transmitting terminal and the relay terminal has been completed, or a number for identifying data last transmitted by the transmitting terminal.

The performing of the connection configuration information with the relay terminal may comprise: identifying a second identifier of a neighboring terminal by receiving a signal from the neighboring terminal; comparing the second identifier with a first identifier of the relay terminal indicated by the connection configuration information; and configuring a connection with the relay terminal when the second identifier is identical to the first identifier.

The first message may be a radio resource control (RRC) reconfiguration sidelink message or sidelink control information (SCI), and the second message may be an RRC reconfiguration complete sidelink message or SCI.

A transmitting terminal, according to a third exemplary embodiment of the present disclosure for achieving the above-described objective, may comprise: a processor; a memory electronically communicating with the processor; and instructions stored in the memory. When executed by the processor, the instructions may cause the transmitting terminal to perform: performing sidelink (SL) communication with a receiving terminal; in response to determining that SL relay communication is required, performing a connection configuration operation with a relay terminal; transmitting, to the receiving terminal, a first message including connection configuration information for the SL relay communication; receiving, from the receiving terminal, a second message indicating that connection configuration between the receiving terminal and the relay terminal has been completed; and performing the SL relay communication with the receiving terminal through the relay terminal.

The instructions may further cause the transmitting terminal to perform: releasing connection configuration between the transmitting terminal and the relay terminal when the connection configuration between the receiving terminal and the relay terminal has failed.

The connection configuration operation between the transmitting terminal and the relay terminal may be performed when a base station indicates to enable the SL relay communication.

In the performing of the connection configuration operation with the relay terminal, the instructions may further cause the transmitting terminal to perform: performing a measurement operation on signals received from one or more neighboring terminals; determining one neighboring terminal among the one or more neighboring terminals as the relay terminal based on a result of the measurement operation; and configuring a connection with the relay terminal.

The connection configuration information may include at least one of an identifier of the relay terminal, information indicating that connection configuration between the transmitting terminal and the relay terminal has been completed, or a number for identifying data last transmitted by the transmitting terminal.

### [Advantageous Effects]

According to the present disclosure, when it is determined that SL relay communication is required during SL communication between a transmitting terminal and a receiving terminal, the transmitting terminal may configure a connection with a relay terminal, and transmit connection configuration information of the relay terminal to the receiving terminal. The receiving terminal may configure a connection with the relay terminal based on the connection configuration information received from the transmitting terminal. When connection configuration of `transmitting terminal - relay terminal - receiving terminal' is completed, the transmitting terminal may perform SL relay communication with the receiving terminal. Accordingly, the connection configuration procedure for SL relay communication can be efficiently performed, and based thereon, the SL relay communication can be performed.

### [Description of Drawings]

FIG. 1 is a conceptual diagram illustrating V2X communication scenarios.
FIG. 2 is a conceptual diagram illustrating an exemplary embodiment of a cellular communication system.
FIG. 3 is a conceptual diagram illustrating an exemplary embodiment of a communication node constituting a cellular communication system.
FIG. 4 is a block diagram illustrating an exemplary embodiment of a user plane protocol stack of a LTE performing sidelink communication.
FIG. 5 is a block diagram illustrating a first exemplary embodiment of a control plane protocol stack of a LTE performing sidelink communication.
FIG. 6 is a block diagram illustrating a second exemplary embodiment of a control plane protocol stack of a LTE performing sidelink communication.
FIG. 7 is a sequence chart illustrating a first exemplary embodiment of a connection configuration method for SL relay communication.

### [Mode for the Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In exemplary embodiments of the present disclosure, (re)transmission may mean `transmission', 'retransmission', or `transmission and retransmission', (re)configuration may mean 'configuration', `reconfiguration', or `configuration and reconfiguration', (re)connection may mean 'connection', `reconnection', or `connection and reconnection', and (re)access may mean 'access', `re-access', or `access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as `comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure will be described in detail with reference to the accompanying drawings. In describing the disclosure, to facilitate the entire understanding of the disclosure, like numbers refer to like elements throughout the description of the figures and the repetitive description thereof will be omitted.

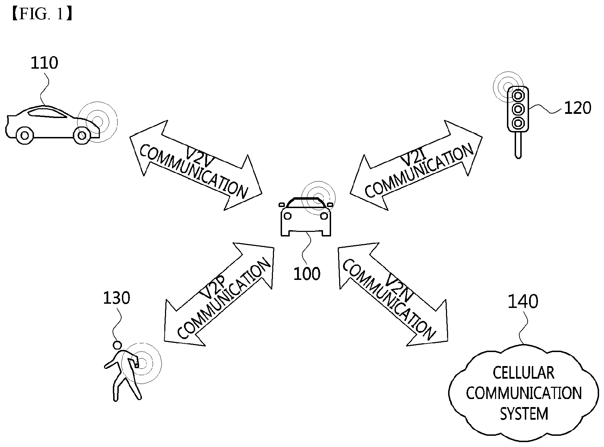

FIG. 1 is a conceptual diagram illustrating V2X communication scenarios.

As shown in FIG. 1, the V2X communications may include Vehicle-to-Vehicle (V2V) communications, Vehicle-to-Infrastructure (V2I) communications, Vehicle-to-Pedestrian (V2P) communications, Vehicle-to-Network (V2N) communications, and the like. The V2X communications may be supported by a cellular communication system (e.g., a cellular communication system 140), and the V2X communications supported by the cellular communication system 140 may be referred to as "Cellular-V2X (C-V2X) communications." Here, the cellular communication system 140 may include the 4G communication system (e.g., LTE communication system or LTE-A communication system), the 5G communication system (e.g., NR communication system), and the like.

The V2V communications may include communications between a first vehicle 100 (e.g., a communication node located in the vehicle 100) and a second vehicle 110 (e.g., a communication node located in the vehicle 110). Various driving information such as velocity, heading, time, position, and the like may be exchanged between the vehicles 100 and 110 through the V2V communications. For example, autonomous driving (e.g., platooning) may be supported based on the driving information exchanged through the V2V communications. The V2V communications supported in the cellular communication system 140 may be performed based on "sidelink" communication technologies (e.g., ProSe and D2D communication technologies, and the like). In this case, the communications between the vehicles 100 and 110 may be performed using at least one sidelink channel established between the vehicles 100 and 110.

The V2I communications may include communications between the first vehicle 100 (e.g., the communication node located in the vehicle 100) and an infrastructure (e.g., road side unit (RSU)) 120 located on a roadside. The infrastructure 120 may also include a traffic light or a street light which is located on the roadside. For example, when the V2I communications are performed, the communications may be performed between the communication node located in the first vehicle 100 and a communication node located in a traffic light. Traffic information, driving information, and the like may be exchanged between the first vehicle 100 and the infrastructure 120 through the V2I communications. The V2I communications supported in the cellular communication system 140 may also be performed based on sidelink communication technologies (e.g., ProSe and D2D communication technologies, and the like). In this case, the communications between the vehicle 100 and the infrastructure 120 may be performed using at least one sidelink channel established between the vehicle 100 and the infrastructure 120.

The V2P communications may include communications between the first vehicle 100 (e.g., the communication node located in the vehicle 100) and a person 130 (e.g., a communication node carried by the person 130). The driving information of the first vehicle 100 and movement information of the person 130 such as velocity, heading, time, position, and the like may be exchanged between the vehicle 100 and the person 130 through the V2P communications. The communication node located in the vehicle 100 or the communication node carried by the person 130 may generate an alarm indicating a danger by judging a dangerous situation based on the obtained driving information and movement information. The V2P communications supported in the cellular communication system 140 may be performed based on sidelink communication technologies (e.g., ProSe and D2D communication technologies, and the like). In this case, the communications between the communication node located in the vehicle 100 and the communication node carried by the person 130 may be performed using at least one sidelink channel established between the communication nodes.

The V2N communications may be communications between the first vehicle 100 (e.g., the communication node located in the vehicle 100) and a server connected through the cellular communication system 140. The V2N communications may be performed based on the 4G communication technology (e.g., LTE or LTE-A) or the 5G communication technology (e.g., NR). Also, the V2N communications may be performed based on a Wireless Access in Vehicular Environments (WAVE) communication technology or a Wireless Local Area Network (WLAN) communication technology which is defined in Institute of Electrical and Electronics Engineers (IEEE) 802.11, or a Wireless Personal Area Network (WPAN) communication technology defined in IEEE 802.15.

Meanwhile, the cellular communication system 140 supporting the V2X communications may be configured as follows.

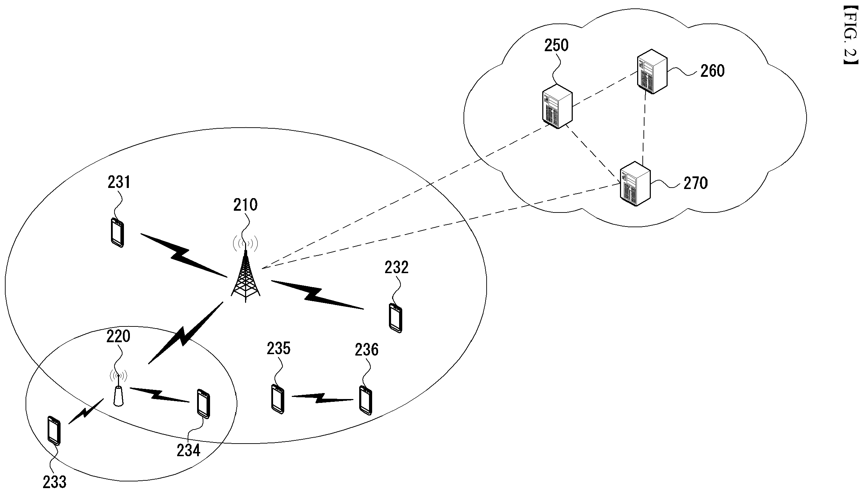

FIG. 2 is a conceptual diagram illustrating an exemplary embodiment of a cellular communication system.

As shown in FIG. 2, a cellular communication system may include an access network, a core network, and the like. The access network may include a base station 210, a relay 220, User Equipments (UEs) 231 through 236, and the like. The UEs 231 through 236 may include communication nodes located in the vehicles 100 and 110 of FIG. 1, the communication node located in the infrastructure 120 of FIG. 1, the communication node carried by the person 130 of FIG. 1, and the like. When the cellular communication system supports the 4G communication technology, the core network may include a serving gateway (S-GW) 250, a packet data network (PDN) gateway (P-GW) 260, a mobility management entity (MME) 270, and the like.

When the cellular communication system supports the 5G communication technology, the core network may include a user plane function (UPF) 250, a session management function (SMF) 260, an access and mobility management function (AMF) 270, and the like. Alternatively, when the cellular communication system operates in a Non-Stand Alone (NSA) mode, the core network constituted by the S-GW 250, the P-GW 260, and the MME 270 may support the 5G communication technology as well as the 4G communication technology, and the core network constituted by the UPF 250, the SMF 260, and the AMF 270 may support the 4G communication technology as well as the 5G communication technology.

In addition, when the cellular communication system supports a network slicing technique, the core network may be divided into a plurality of logical network slices. For example, a network slice supporting V2X communications (e.g., a V2V network slice, a V2I network slice, a V2P network slice, a V2N network slice, etc.) may be configured, and the V2X communications may be supported through the V2X network slice configured in the core network.

The communication nodes (e.g., base station, relay, UE, S-GW, P-GW, MME, UPF, SMF, AMF, etc.) comprising the cellular communication system may perform communications by using at least one communication technology among a code division multiple access (CDMA) technology, a time division multiple access (TDMA) technology, a frequency division multiple access (FDMA) technology, an orthogonal frequency division multiplexing (OFDM) technology, a filtered OFDM technology, an orthogonal frequency division multiple access (OFDMA) technology, a single carrier FDMA (SC-FDMA) technology, a non-orthogonal multiple access (NOMA) technology, a generalized frequency division multiplexing (GFDM) technology, a filter bank multi-carrier (FBMC) technology, a universal filtered multi-carrier (UFMC) technology, and a space division multiple access (SDMA) technology.

The communication nodes (e.g., base station, relay, UE, S-GW, P-GW, MME, UPF, SMF, AMF, etc.) comprising the cellular communication system may be configured as follows.

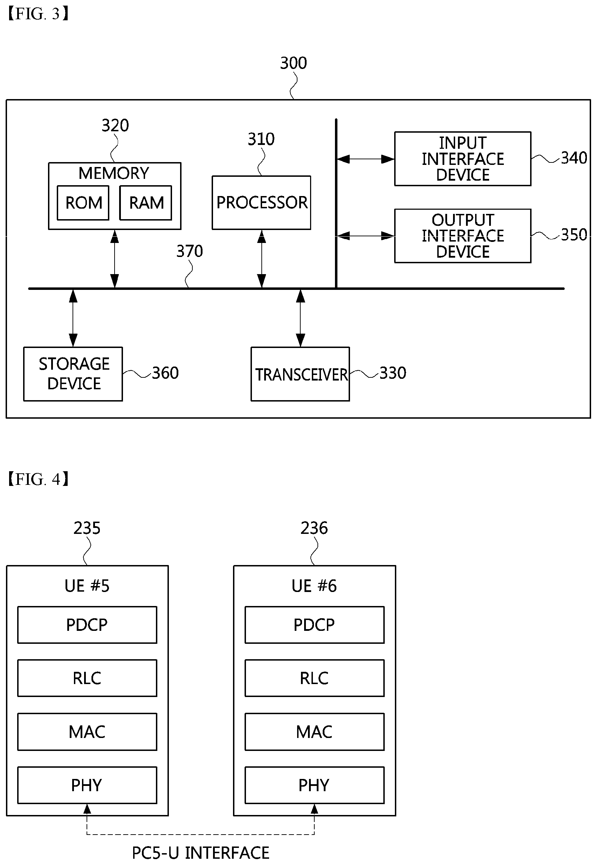

FIG. 3 is a conceptual diagram illustrating an exemplary embodiment of a communication node constituting a cellular communication system.

As shown in FIG. 3, a communication node 300 may comprise at least one processor 310, a memory 320, and a transceiver 330 connected to a network for performing communications. Also, the communication node 300 may further comprise an input interface device 340, an output interface device 350, a storage device 360, and the like. Each component included in the communication node 300 may communicate with each other as connected through a bus 370.

However, each of the components included in the communication node 300 may be connected to the processor 310 via a separate interface or a separate bus rather than the common bus 370. For example, the processor 310 may be connected to at least one of the memory 320, the transceiver 330, the input interface device 340, the output interface device 350, and the storage device 360 via a dedicated interface.

The processor 310 may execute at least one instruction stored in at least one of the memory 320 and the storage device 360. The processor 310 may refer to a central processing unit (CPU), a graphics processing unit (GPU), or a dedicated processor on which methods in accordance with embodiments of the present disclosure are performed. Each of the memory 320 and the storage device 360 may include at least one of a volatile storage medium and a non-volatile storage medium. For example, the memory 320 may comprise at least one of read-only memory (ROM) and random access memory (RAM).

Referring again to FIG. 2, in the communication system, the base station 210 may form a macro cell or a small cell, and may be connected to the core network via an ideal backhaul or a non-ideal backhaul. The base station 210 may transmit signals received from the core network to the UEs 231 through 236 and the relay 220, and may transmit signals received from the UEs 231 through 236 and the relay 220 to the core network. The LTEs 231, 232, 234, 235 and 236 may belong to cell coverage of the base station 210. The UEs 231, 232, 234, 235 and 236 may be connected to the base station 210 by performing a connection establishment procedure with the base station 210. The UEs 231, 232, 234, 235 and 236 may communicate with the base station 210 after being connected to the base station 210.

The relay 220 may be connected to the base station 210 and may relay communications between the base station 210 and the UEs 233 and 234. That is, the relay 220 may transmit signals received from the base station 210 to the UEs 233 and 234, and may transmit signals received from the LTEs 233 and 234 to the base station 210. The LTE 234 may belong to both of the cell coverage of the base station 210 and the cell coverage of the relay 220, and the LTE 233 may belong to the cell coverage of the relay 220. That is, the UE 233 may be located outside the cell coverage of the base station 210. The UEs 233 and 234 may be connected to the relay 220 by performing a connection establishment procedure with the relay 220. The UEs 233 and 234 may communicate with the relay 220 after being connected to the relay 220.

The base station 210 and the relay 220 may support multiple-input, multiple-output (MIMO) technologies (e.g., single user (SU)-MIMO, multi-user (MU)-MIMO, massive MIMO, etc.), coordinated multipoint (CoMP) communication technologies, carrier aggregation (CA) communication technologies, unlicensed band communication technologies (e.g., Licensed Assisted Access (LAA), enhanced LAA (eLAA), etc.), sidelink communication technologies (e.g., ProSe communication technology, D2D communication technology), or the like. The UEs 231, 232, 235 and 236 may perform operations corresponding to the base station 210 and operations supported by the base station 210. The LTEs 233 and 234 may perform operations corresponding to the relays 220 and operations supported by the relays 220.

Here, the base station 210 may be referred to as a Node B (NB), an evolved Node B (eNB), a base transceiver station (BTS), a radio remote head (RRH), a transmission reception point (TRP), a radio unit (RU), a roadside unit (RSU), a radio transceiver, an access point, an access node, or the like. The relay 220 may be referred to as a small base station, a relay node, or the like. Each of the UEs 231 through 236 may be referred to as a terminal, an access terminal, a mobile terminal, a station, a subscriber station, a mobile station, a portable subscriber station, a node, a device, an on-broad unit (OBU), or the like.

Meanwhile, the communications between the UEs 235 and 236 may be performed based on the sidelink communication technique. The sidelink communications may be performed based on a one-to-one scheme or a one-to-many scheme. When V2V communications are performed using the sidelink communication technique, the UE 235 may be the communication node located in the first vehicle 100 of FIG. 1 and the UE 236 may be the communication node located in the second vehicle 110 of FIG. 1. When V2I communications are performed using the sidelink communication technique, the UE 235 may be the communication node located in first vehicle 100 of FIG. 1 and the UE 236 may be the communication node located in the infrastructure 120 of FIG. 1. When V2P communications are performed using the sidelink communication technique, the UE 235 may be the communication node located in first vehicle 100 of FIG. 1 and the UE 236 may be the communication node carried by the person 130 of FIG. 1.

The scenarios to which the sidelink communications are applied may be classified as shown below in Table 1 according to the positions of the UEs (e.g., the UEs 235 and 236) participating in the sidelink communications. For example, the scenario for the sidelink communications between the LTEs 235 and 236 shown in FIG. 2 may be a sidelink communication scenario C.

**[Table 1]**

| **Sidelink Communication Scenario** | **Position of UE 235** | **Position of UE 236** |
|---|---|---|
| A | Out of coverage of base station 210 | Out of coverage of base station 210 |
| B | In coverage of base station 210 | Out of coverage of base station 210 |
| C | In coverage of base station 210 | In coverage of base station 210 |
| D | In coverage of base station 210 | In coverage of other base station |

Meanwhile, a user plane protocol stack of the UEs (e.g., the UEs 235 and 236) performing sidelink communications may be configured as follows.

FIG. 4 is a block diagram illustrating an exemplary embodiment of a user plane protocol stack of a LTE performing sidelink communication.

As shown in FIG. 4, a left UE may be the UE 235 shown in FIG. 2 and a right UE may be the UE 236 shown in FIG. 2. The scenario for the sidelink communications between the UEs 235 and 236 may be one of the sidelink communication scenarios A through D of Table 1. The user plane protocol stack of each of the UEs 235 and 236 may comprise a physical (PHY) layer, a medium access control (MAC) layer, a radio link control (RLC) layer, and a packet data convergence protocol (PDCP) layer.

The sidelink communications between the UEs 235 and 236 may be performed using a PC5 interface (e.g., PC5-U interface). A layer-2 identifier (ID) (e.g., a source layer-2 ID, a destination layer-2 ID) may be used for the sidelink communications, and the layer 2-ID may be an ID configured for the V2X communications (e.g., V2X service). Also, in the sidelink communications, a hybrid automatic repeat request (HARQ) feedback operation may be supported, and an RLC acknowledged mode (RLC AM) or an RLC unacknowledged mode (RLC UM) may be supported.

Meanwhile, a control plane protocol stack of the UEs (e.g., the UEs 235 and 236) performing sidelink communications may be configured as follows.

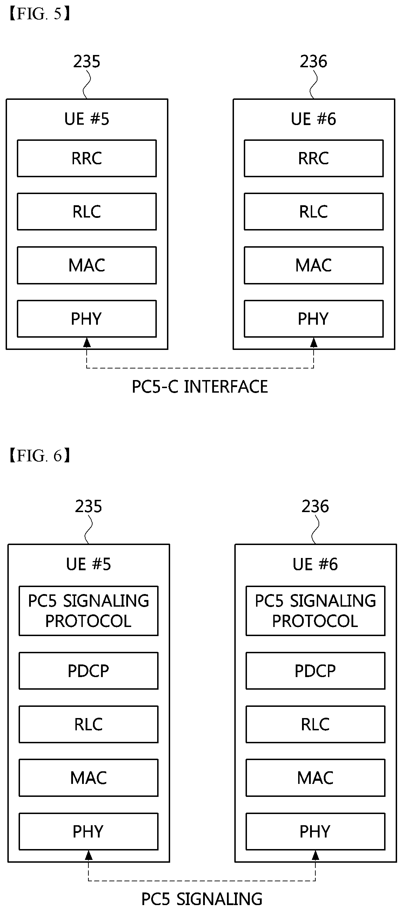

FIG. 5 is a block diagram illustrating a first exemplary embodiment of a control plane protocol stack of a LTE performing sidelink communication, and FIG. 6 is a block diagram illustrating a second exemplary embodiment of a control plane protocol stack of a LTE performing sidelink communication.

As shown in FIGS. 5 and 6, a left UE may be the LTE 235 shown in FIG. 2 and a right UE may be the UE 236 shown in FIG. 2. The scenario for the sidelink communications between the UEs 235 and 236 may be one of the sidelink communication scenarios A through D of Table 1. The control plane protocol stack illustrated in FIG. 5 may be a control plane protocol stack for transmission and reception of broadcast information (e.g., Physical Sidelink Broadcast Channel (PSBCH)).

The control plane protocol stack shown in FIG. 5 may include a PHY layer, a MAC layer, an RLC layer, and a radio resource control (RRC) layer. The sidelink communications between the UEs 235 and 236 may be performed using a PC5 interface (e.g., PC5-C interface). The control plane protocol stack shown in FIG. 6 may be a control plane protocol stack for one-to-one sidelink communication. The control plane protocol stack shown in FIG. 6 may include a PHY layer, a MAC layer, an RLC layer, a PDCP layer, and a PC5 signaling protocol layer.

Meanwhile, channels used in the sidelink communications between the UEs 235 and 236 may include a Physical Sidelink Shared Channel (PSSCH), a Physical Sidelink Control Channel (PSCCH), a Physical Sidelink Discovery Channel (PSDCH), and a Physical Sidelink Broadcast Channel (PSBCH). The PSSCH may be used for transmitting and receiving sidelink data and may be configured in the UE (e.g., UE 235 or 236) by a higher layer signaling. The PSCCH may be used for transmitting and receiving sidelink control information (SCI) and may also be configured in the UE (e.g., UE 235 or 236) by a higher layer signaling.

The PSDCH may be used for a discovery procedure. For example, a discovery signal may be transmitted over the PSDCH. The PSBCH may be used for transmitting and receiving broadcast information (e.g., system information). Also, a demodulation reference signal (DM-RS), a synchronization signal, or the like may be used in the sidelink communications between the UEs 235 and 236. The synchronization signal may include a primary sidelink synchronization signal (PSSS) and a secondary sidelink synchronization signal (SSSS).

Meanwhile, a sidelink transmission mode (TM) may be classified into sidelink TMs 1 to 4 as shown below in Table 2.

**[Table 2]**

| **Sidelink TM** | **Description** |
|---|---|
| 1 | Transmission using resources scheduled by base station |
| 2 | UE autonomous transmission without scheduling of base station |
| 3 | Transmission using resources scheduled by base station in V2X communications |
| 4 | UE autonomous transmission without scheduling of base station in V2X communications |

When the sidelink TM 3 or 4 is supported, each of the UEs 235 and 236 may perform sidelink communications using a resource pool configured by the base station 210. The resource pool may be configured for each of the sidelink control information and the sidelink data.

The resource pool for the sidelink control information may be configured based on an RRC signaling procedure (e.g., a dedicated RRC signaling procedure, a broadcast RRC signaling procedure). The resource pool used for reception of the sidelink control information may be configured by a broadcast RRC signaling procedure. When the sidelink TM 3 is supported, the resource pool used for transmission of the sidelink control information may be configured by a dedicated RRC signaling procedure. In this case, the sidelink control information may be transmitted through resources scheduled by the base station 210 within the resource pool configured by the dedicated RRC signaling procedure. When the sidelink TM 4 is supported, the resource pool used for transmission of the sidelink control information may be configured by a dedicated RRC signaling procedure or a broadcast RRC signaling procedure. In this case, the sidelink control information may be transmitted through resources selected autonomously by the LTE (e.g., LTE 235 or 236) within the resource pool configured by the dedicated RRC signaling procedure or the broadcast RRC signaling procedure.

When the sidelink TM 3 is supported, the resource pool for transmitting and receiving sidelink data may not be configured. In this case, the sidelink data may be transmitted and received through resources scheduled by the base station 210. When the sidelink TM 4 is supported, the resource pool for transmitting and receiving sidelink data may be configured by a dedicated RRC signaling procedure or a broadcast RRC signaling procedure. In this case, the sidelink data may be transmitted and received through resources selected autonomously by the UE (e.g., UE 235 or 236) within the resource pool configured by the dedicated RRC signaling procedure or the broadcast RRC signaling procedure.

Hereinafter, sidelink communication methods will be described. Even when a method (e.g., transmission or reception of a signal) to be performed at a first communication node among communication nodes is described, a corresponding second communication node may perform a method (e.g., reception or transmission of the signal) corresponding to the method performed at the first communication node. That is, when an operation of a UE #1 (e.g., vehicle #1) is described, a UE #2 (e.g., vehicle #2) corresponding thereto may perform an operation corresponding to the operation of the UE #1. Conversely, when an operation of the UE #2 is described, the corresponding LTE #1 may perform an operation corresponding to the operation of the UE #2. In exemplary embodiments described below, an operation of a vehicle may be an operation of a communication node located in the vehicle.

In exemplary embodiments, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g., master information block (MIB), system information block (SIB)) and/or an RRC message. The MAC signaling may refer to an operation of transmitting and receiving a MAC control element (CE). The PHY signaling may refer to an operation of transmitting and receiving control information (e.g., downlink control information (DCI), uplink control information (UCI), or SCI).

A sidelink signal may be a synchronization signal and a reference signal used for sidelink communication. For example, the synchronization signal may be a synchronization signal/physical broadcast channel (SS/PBCH) block, sidelink synchronization signal (SLSS), primary sidelink synchronization signal (PSSS), secondary sidelink synchronization signal (SSSS), or the like. The reference signal may be a channel state information-reference signal (CSI-RS), DM-RS, phase tracking-reference signal (PT-RS), cell-specific reference signal (CRS), sounding reference signal (SRS), discovery reference signal (DRS), or the like.

A sidelink channel may be a PSSCH, PSCCH, PSDCH, PSBCH, physical sidelink feedback channel (PSFCH), or the like. In addition, a sidelink channel may refer to a sidelink channel including a sidelink signal mapped to specific resources in the corresponding sidelink channel. The sidelink communication may support a broadcast service, a multicast service, a groupcast service, and a unicast service.

The sidelink communication may be performed based on a single-SCI scheme or a multi-SCI scheme. When the single-SCI scheme is used, data transmission (e.g., sidelink data transmission, sidelink-shared channel (SL-SCH) transmission) may be performed based on one SCI (e.g., 1st-stage SCI). When the multi-SCI scheme is used, data transmission may be performed using two SCIs (e.g., 1 st-stage SCI and 2nd-stage SCI). The SCI(s) may be transmitted on a PSCCH and/or a PSSCH. When the single-SCI scheme is used, the SCI (e.g., 1st-stage SCI) may be transmitted on a PSCCH. When the multi-SCI scheme is used, the 1st-stage SCI may be transmitted on a PSCCH, and the 2nd-stage SCI may be transmitted on the PSCCH or a PSSCH. The 1st-stage SCI may be referred to as 'first-stage SCI', and the 2nd-stage SCI may be referred to as 'second-stage SCI'. A format of the first-stage SCI may include a SCI format 1-A, and a format of the second-stage SCI may include a SCI format 2-A and a SCI format 2-B.

The 1st-stage SCI may include or more information elements among priority information, frequency resource assignment information, time resource assignment information, resource reservation period information, demodulation reference signal (DMRS) pattern information, 2nd-stage SCI format information, a beta_offset indicator, the number of DMRS ports, and modulation and coding scheme (MCS) information. The 2nd-stage SCI may include one or more information elements among a HARQ processor identifier (ID), a redundancy version (RV), a source ID, a destination ID, CSI request information, a zone ID, and communication range requirements.

Meanwhile, a transmitting terminal may perform SL communication with a receiving terminal. The SL communication between the transmitting terminal and the receiving terminal may be performed in a unicast scheme. The transmitting terminal may refer to a terminal that transmits data (e.g., SL data) through a sidelink. That is, the transmitting terminal may refer to a source terminal. The receiving terminal may refer to a terminal that receives the SL data through the sidelink. That is, the receiving terminal may refer to a destination terminal. When relay communication (e.g., SL relay communication) is required during the SL communication between the transmitting terminal and the receiving terminal, a connection between the transmitting terminal and a relay terminal may be configured, and a connection between the receiving terminal and the relay terminal may be configured. When the above connection configuration is completed, SL relay communication may be performed. A method of configuring connections between the terminals may be performed as follows.

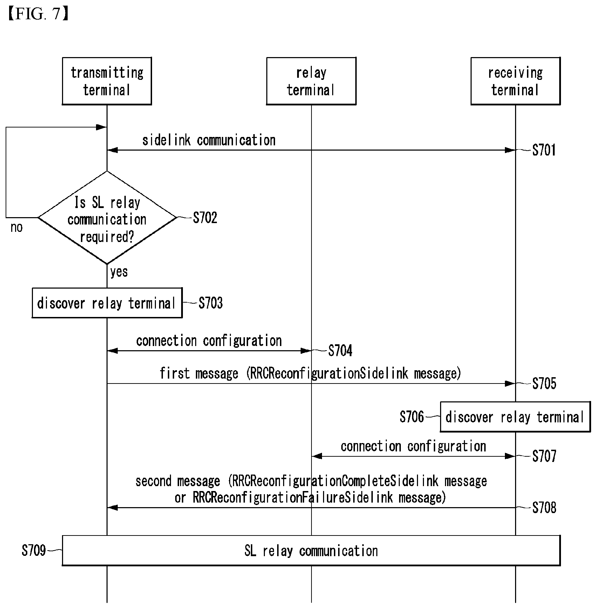

FIG. 7 is a sequence chart illustrating a first exemplary embodiment of a connection configuration method for SL relay communication.

As shown in FIG. 7, a communication system may include a transmitting terminal, a receiving terminal, and a relay terminal. Each of the transmitting terminal, receiving terminal, and relay terminal may be configured identically or similarly to the communication node 300 shown in FIG. 3. The transmitting terminal, receiving terminal, and relay terminal may support the protocol stack(s) shown in FIGS. 4 to 6.

The transmitting terminal may perform SL communication with the receiving terminal (S701). The SL communication may be performed in a unicast scheme. The SL communication may be performed using resource(s) allocated according to a mode 1 or resource(s) selected according to a mode 2. The mode 1 may be the SL TM #1 or #3 defined in Table 2, and the mode 2 may be the SL TM #2 or #4 defined in Table 2. During the SL communication, the transmitting terminal may determine whether SL relay communication is required (S702). That is, the transmitting terminal may determine whether SL relay communication needs to be performed instead of the SL communication. The transmitting terminal may perform the step S702 by itself regardless of configuration of a base station. Alternatively, the step S702 may be performed according to configuration of a base station (e.g., the base station to which the transmitting terminal is connected). The base station may use at least one of system information, RRC message, MAC control element (CE), and/or DCI to transmit an enable/disable indicator of SL relay communication the terminal (e.g., transmitting terminal and/or receiving terminal). The transmitting terminal may receive the enable/disable indicator of SL relay communication from the base station. When the indicator indicates to disable SL relay communication, the transmitting terminal may not perform the step S702 (or steps S702 to S709). When the indicator indicates to enable SL relay communication, the transmitting terminal may perform the step S702 (or S702 to S709).

In the step S702, the transmitting terminal may determine that SL relay communication is required when one or more conditions defined in Table 3 below are satisfied. In a condition 1, negative acknowledgment (NACK) may also refer to 'no HARQ-ACK', and p may be a natural number.

**[Table 3]**

| | **Description** |
|---|---|
| Condition 1 | When the number of NACKs received from the receiving terminal is p or more |
| Condition 2 | When a channel quality (e.g., link quality) between the transmitting terminal and the receiving terminal is equal to or less than a reference value (e.g., RSRP, RSRQ, RSSI, SINR) |
| Condition 3 | When an indicator requesting SL relay communication is received from the receiving terminal |
| Condition 4 | When SL relay communication is triggered by a base station |

The base station may use at least one of system information, RRC message, MAC CE, or DCI to transmit to the terminal (e.g., transmitting terminal and/or receiving terminal) information (e.g., p and/or reference value) required to determine whether the condition(s) defined in Table 3 are satisfied. The transmitting terminal may determine whether the condition(s) defined in Table 3 are satisfied based on the information received from the base station. When it is determined that SL relay communication is not required, the transmitting terminal may perform the SL communication with the receiving terminal without SL relaying (S701). When it is determined that SL relay communication is required, the transmitting terminal may perform the following steps. That is, the transmitting terminal may discovery a relay terminal (S703). In addition, when it is determined that SL relay communication is required, the transmitting terminal may transmit information indicating to perform a connection configuration operation for SL relay communication to the base station by using at least one of an RRC message, MAC CE, or control information (e.g., UCI). The base station may determine that a connection configuration operation for SL relay communication is to be performed based on the information received from the transmitting terminal. The information indicating to perform the connection configuration operation for SL relay communication may be transmitted to the base station after the step S702 or after the step S703. When the information indicating to perform the connection configuration operation for SL relay communication is transmitted after the step S703, the information may be transmitted to the base station together with information (e.g., identifier) of the relay terminal discovered in the step S703. In this case, the base station may identify the information of the relay terminal supporting SL relay communication.

In the step S703, the transmitting terminal may receive signal(s) and/or channel(s) from neighboring terminal(s), and may determine one of the neighboring terminal(s) as the relay terminal based on a measurement result of the signal(s) and/or channel(s). Here, the signal may be a reference signal, synchronization signal, and/or discovery signal, and the channel may be a PSCCH, PSSCH, PSFCH, PSBCH, and/or PSDCH. The transmitting terminal may determine a neighbor terminal having a measurement result equal to or greater than a threshold value as the relay terminal. The threshold value may be a threshold value of a reference signal received power (RSRP), reference signal received quality (RSRQ), received signal strength indicator (RSSI), or signal to interference plus noise ratio (SINR). The threshold value may be defined in technical specifications. Alternatively, the base station may inform the threshold value to the terminal (e.g., transmitting terminal and/or receiving terminal) by using system information, RRC message, MAC CE, or DCI.

The transmitting terminal may configure a connection with the discovered relay terminal (S704). The connection between the transmitting terminal and the relay terminal may be a PC5 connection. SL communication between the transmitting terminal and the relay terminal may be performed in a unicast scheme. In the step S704, the transmitting terminal may transmit its own information (e.g., capability information or identifier) to the relay terminal, and the relay terminal may transmit its own information (e.g., capability information, or identifier) to the transmitting terminal. Accordingly, the transmitting terminal may identify the information of the relay terminal, and the relay terminal may identify the information of the transmitting terminal. The identifier of the relay terminal may be a layer 2 (L2) identifier, ProSe UE ID, and/or ProSe application code. Each of the ProSe UE ID and ProSe application code may correspond to the L2 identifier.

The ProSe UE ID and/or the ProSe application code may be identifiable in a higher layer of a communication node (e.g., transmitting terminal, receiving terminal, and relay terminal). A transmission procedure of a discovery message (e.g., discovery signal) may be performed in a higher layer and/or a lower layer (e.g., PDCP layer, RRC layer, or MAC layer). In order to cover all of the above operations, the identifier of the relay terminal may be at least one of an L2 identifier, ProSe UE ID, and ProSe application code. For example, a combination of L2 identifier and ProSe UE ID or a combination of L2 identifier and ProSe application code may be used as the identifier of the relay terminal.

When the connection configuration between the transmitting terminal and the relay terminal has been completed, the transmitting terminal may transmit a first message to the receiving terminal (S705). The first message may be transmitted to support connection configuration between the receiving terminal and the relay terminal. The first message may be an RRC reconfiguration sidelink message (i.e., *RRC ReconfigurationSidelink* message). The first message may include one or more information elements defined in Table 4 below. That is, the first message may include connection configuration information for the SL relay communication. Alternatively, the first message may be SCI (e.g., first-stage SCI and/or second-stage SCI). In this case, one or more information elements defined in Table 4 may be included in the SCI transmitted from the transmitting terminal to the receiving terminal.

**[Table 4]**

| | **Description** |
|---|---|
| Information of relay terminal | -identifier (e.g., L2 identifier, ProSe UE ID, and/or ProSe application code) |
| | -Capability information |
| Relay link indicator (RelayLink-indication) | The relay link indicator may indicate that SL relay communication is required, that SL communication is relayed through the relay terminal, and/or that connection configuration between the transmitting terminal and the relay terminal has been completed. |
| Hyper frame number (HFN) | HFN may indicate a number identifying data transmitted last to the receiving terminal after the connection configuration operation between the transmitting terminal and the relay terminal is determined to be performed, or after the connection configuration between the transmitting terminal and the relay terminal has been complected. |

The identifier of the relay terminal may be referred to as *sl-RelayUE-Identity.* The relay link indicator may be configured in ENUMERATED or BOOLEAN type. The HFN may be used to determine whether data is lost in the SL relay communication between the transmitting terminal and the receiving terminal. The HFN may be delivered to the receiving terminal through another message instead of the first message. For example, the transmitting terminal may receive a second message from the receiving terminal after transmitting the first message, and then transmit a third message including the HFN to the receiving terminal. The receiving terminal may identify the HFN by receiving the third message from the transmitting terminal. The second message may be an RRC reconfiguration complete sidelink message (i.e., *RRC ReconfigurationCompleteSidelink* message), an RRC reconfiguration complete message (i.e., *RRCReconfigurationComplete* message), or SCI, and the third message may be an RRC message. Alternatively, the third message may be SCI.

The receiving terminal may receive the first message from the transmitting terminal, and may identify information element(s) included in the first message (e.g., information element(s) defined in Table 4). Based on the relay link indicator included in the first message, the receiving terminal may determine that the SL relay communication is required, that the SL communication is relayed through the relay terminal, and/or that the connection configuration between the transmitting terminal and the relay terminal has been completed. The receiving terminal may identify the relay terminal supporting the SL relay communication based on the information of the relay terminal included in the first message. The receiving terminal may identify the number identifying the data transmitted last by the transmitting terminal based on the HFN included in the first message. After the connection configuration between the receiving terminal and the relay terminal has been completed, the receiving terminal may identify whether data is lost in the SL relay communication through the relay terminal based on the HFN.

The receiving terminal may discover the relay terminal indicated by the first message (S706). For example, the receiving terminal may identify identifier(s) of neighboring terminal(s) by receiving signal(s) and/or channel(s) from the neighboring terminal(s), and determine whether the identified identifier is the same as the identifier included in the first message. Here, the signal may be a reference signal, synchronization signal, and/or discovery signal, and the channel may be a PSCCH, PSSCH, PSFCH, PSBCH, and/or PSDCH. When the identified identifier is the same as the identifier included in the first message, the receiving terminal may determine a neighbor terminal having the identified identifier as the relay terminal. For example, an L2 layer and/or higher layer of the receiving terminal may identify the identifier (e.g., L2 identifier, ProSe LTE ID, and/or ProSe application code) of the neighboring terminal, and may determine whether the identified identifier is the same as the identifier included in the first message (i.e., the identifier of the relay terminal).

The receiving terminal may configure a connection with the discovered relay terminal (S707). That is, the receiving terminal and the transmitting terminal may be connected to the same relay terminal. The connection between the receiving terminal and the relay terminal may be a PC5 connection. SL communication between the receiving terminal and the relay terminal may be performed in a unicast scheme. In the step S707, the receiving terminal may transmit its own information (e.g., capability information, identifier) to the relay terminal, and the relay terminal may transmit its own information (e.g., capability information, identifier) to the receiving terminal. Accordingly, the receiving terminal may identify the information of the relay terminal, and the relay terminal may identify the information of the receiving terminal.

When the connection configuration between the receiving terminal and the relay terminal has been completed, the receiving terminal may transmit the second message indicating that the connection configuration between the receiving terminal and the relay terminal has been completed to the transmitting terminal (S708). The second message may indicate that the SL relay communication is possible. The second message may be an RRC reconfiguration complete sidelink message (i.e., *RRCReconfigurationCompleteSidelink* message) or an RRC reconfiguration complete message (i.e., *RRCReconfigurationComplete* message). Alternatively, the second message may be SCI (e.g., first-stage SCI and/or second-stage SCI). The second message may include one or more information elements defined in Table 4. The information of the relay terminal included in the second message may indicate the relay terminal that has completed the connection configuration with the receiving terminal. The relay link indicator included in the second message may indicate that the SL relay communication is possible and/or that the connection configuration between the receiving terminal and the relay terminal has been completed. The relay link indicator may be configured in ENUMERATED or BOOLEAN type. The HFN included in the second message may indicate a number identifying data last transmitted by the transmitting terminal and/or a number identifying data last received by the receiving terminal.

When the connection configuration between the transmitting terminal and the receiving terminal (e.g., connection configuration for the SL relay communication) has been completed, the transmitting terminal may transmit information indicating that the connection configuration between the transmitting terminal and the receiving terminal has been completed to the base station by using at least one of a higher layer message, MAC CE, or control information (e.g., UCI). When the information indicating that the connection configuration between the transmitting terminal and the receiving terminal has been completed is transmitted after the step S708, the information may be transmitted to the base station together with the information (e.g., capability information, identifier) of the relay terminal having completed the connection configuration with the transmitting terminal. In this case, the base station may identify the information of the relay terminal connected to the transmitting terminal.

On the other hand, when the connection configuration between the receiving terminal and the relay terminal has failed, the receiving terminal may transmit the second message indicating that connection configuration between the receiving terminal and the relay terminal has failed to the transmitting terminal (S708). The second message may indicate that the SL relay communication is impossible. The second message may be an RRC reconfiguration failure sidelink message (i.e., *RRCReconfigurationFailureSidelink* message) or an RRC reconfiguration failure message (i.e., *RRCReconfigurationFailure* message). Alternatively, the second message may be SCI (e.g., first-stage SCI and/or second-stage SCI). The second message may include one or more information elements defined in Table 4. The information of the relay terminal included in the second message may indicate the relay terminal having failed the connection configuration with the receiving terminal. The relay link indicator included in the second message may indicate that the SL relay communication is impossible and/or that the connection configuration between the receiving terminal and the relay terminal has failed. The relay link indicator may be configured in ENUMERATED or BOOLEAN type.

Meanwhile, the transmitting terminal may perform a monitoring operation for receiving the second message after transmitting the first message. If the second message is not received within a preset time or if the second message received from the receiving terminal indicates that the connection configuration between the receiving terminal and the relay terminal has failed, the transmitting terminal may determine that the connection configuration between the receiving terminal and the relay terminal has failed. In this case, the transmitting terminal may not perform the SL relay communication. That is, the transmitting terminal may perform the SL communication with the receiving terminal without the relay terminal. In addition, the transmitting terminal may transmit a message indicating to release the connection configuration between the transmitting terminal and the relay terminal to the relay terminal. Upon receiving the message indicating to release the connection configuration between the transmitting terminal and the relay terminal, the relay terminal may release the connection configuration between the relay terminal and the transmitting terminal.

When the second message received from the receiving terminal indicates that the connection configuration between the receiving terminal and the relay terminal has been completed, the transmitting terminal may determine that the connection configuration between the receiving terminal and the relay terminal has been completed. In this case, the transmitting terminal may perform the SL relay communication with the receiving terminal (S709). That is, the transmitting terminal may perform SL communication with the receiving terminal through relaying of the relay terminal. For example, the transmitting terminal may transmit SCI and/or data for the receiving terminal to the relay terminal, the relay terminal may transmit the SCI and/or data received from the transmitting terminal to the receiving terminal, and the receiving terminal may receive the SCI and/or data from the relay terminal. In addition, the receiving terminal may transmit HARQ-ACK for the data to the relay terminal, the relay terminal may transmit the HARQ-ACK received from the receiving terminal to the transmitting terminal, and the transmitting terminal may receive the HARQ-ACK from the relay terminal.

When the SL relay communication is performed, the existing connection configuration between the transmitting terminal and the receiving terminal may be unnecessary. Accordingly, the transmitting terminal may release the connection configuration (e.g., SL configuration) between the transmitting terminal and the receiving terminal. In addition, when the SL relay communication is performed, the receiving terminal may release the connection configuration (e.g., SL configuration) between the receiving terminal and the transmitting terminal.

The exemplary embodiments of the present disclosure may be implemented as program instructions executable by a variety of computers and recorded on a computer readable medium. The computer readable medium may include a program instruction, a data file, a data structure, or a combination thereof. The program instructions recorded on the computer readable medium may be designed and configured specifically for the present disclosure or can be publicly known and available to those who are skilled in the field of computer software.

Examples of the computer readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above exemplary hardware device can be configured to operate as at least one software module in order to perform the embodiments of the present disclosure, and vice versa.

While the exemplary embodiments of the present disclosure and their advantages have been described in detail, it should be understood that various changes, substitutions and alterations may be made herein without departing from the scope of the present disclosure.

## Claims

1. An operation method of a transmitting terminal in a communication system, the operation method comprising:
performing sidelink (SL) communication with a receiving terminal;
in response to determining that SL relay communication is required, performing a connection configuration operation with a relay terminal;
transmitting, to the receiving terminal, a first message including connection configuration information for the SL relay communication;
receiving, from the receiving terminal, a second message indicating that connection configuration between the receiving terminal and the relay terminal has been completed; and
performing the SL relay communication with the receiving terminal through the relay terminal.

2. The operation method according to claim 1, wherein when one or more preconfigured conditions are satisfied, the SL relay communication is determined to be required, and the one or more preconfigured conditions include at least one of a case when a number of negative acknowledgments (NACKs) received from the receiving terminal is p or more, a case when a channel quality between the transmitting terminal and the receiving terminal is equal to or less than a reference value, a case when an indicator requesting the SL relay communication is received from the receiving terminal, or a case when the SL relay communication is triggered by a base station.

3. The operation method according to claim 1, wherein the connection configuration operation between the transmitting terminal and the relay terminal is performed when a base station indicates to enable the SL relay communication.

4. The operation method according to claim 1, wherein the performing of the connection configuration operation with the relay terminal comprises:
performing a measurement operation on signals received from one or more neighboring terminals;
determining one neighboring terminal among the one or more neighboring terminals as the relay terminal based on a result of the measurement operation; and
configuring a connection with the relay terminal.

5. The operation method according to claim 1, wherein the connection configuration information includes at least one of an identifier of the relay terminal, information indicating that connection configuration between the transmitting terminal and the relay terminal has been completed, or a number for identifying data last transmitted by the transmitting terminal.

6. The operation method according to claim 1, wherein the second message includes at least one of an identifier of the relay terminal, or information indicating that connection configuration between the receiving terminal and the relay terminal has been completed.

7. The operation method according to claim 1, wherein the first message is a radio resource control (RRC) reconfiguration sidelink message or sidelink control information (SCI), and the second message is an RRC reconfiguration complete sidelink message or SCI.

8. The operation method according to claim 1, further comprising releasing connection configuration between the transmitting terminal and the receiving terminal when the SL relay communication is performed.

9. An operation method of a receiving terminal in a communication system, the operation method comprising:
performing sidelink (SL) communication with a transmitting terminal;
receiving, from the transmitting terminal, a first message including connection configuration information for SL relay communication;
performing a connection configuration operation with a relay terminal indicated by the connection configuration information; and
transmitting, to the transmitting terminal, a second message including a result of the connection configuration operation.

10. The operation method according to claim 9, further comprising performing the SL relay communication with the transmitting terminal when the second message indicates that the connection configuration operation has been completed.

11. The operation method according to claim 9, further comprising performing the SL communication with the transmitting terminal without the relay terminal when the second message indicates that the connection configuration operation has failed.

12. The operation method according to claim 9, wherein the connection configuration operation between the receiving terminal and the relay terminal is performed when the base station indicates to enable the SL relay communication.

13. The operation method according to claim 9, wherein the connection configuration information includes at least one of an identifier of the relay terminal, information indicating that connection configuration between the transmitting terminal and the relay terminal has been completed, or a number for identifying data last transmitted by the transmitting terminal.

14. The operation method according to claim 9, wherein the performing of the connection configuration information with the relay terminal comprises:
identifying a second identifier of a neighboring terminal by receiving a signal from the neighboring terminal;
comparing the second identifier with a first identifier of the relay terminal indicated by the connection configuration information; and
configuring a connection with the relay terminal when the second identifier is identical to the first identifier.

15. The operation method according to claim 9, wherein the first message is a radio resource control (RRC) reconfiguration sidelink message or sidelink control information (SCI), and the second message is an RRC reconfiguration complete sidelink message or SCI.

16. A transmitting terminal in a communication system, comprising:
a processor;
a memory electronically communicating with the processor; and
instructions stored in the memory,
wherein when executed by the processor, the instructions cause the transmitting terminal to perform:
performing sidelink (SL) communication with a receiving terminal;
in response to determining that SL relay communication is required, performing a connection configuration operation with a relay terminal;
transmitting, to the receiving terminal, a first message including connection configuration information for the SL relay communication;
receiving, from the receiving terminal, a second message indicating that connection configuration between the receiving terminal and the relay terminal has been completed; and
performing the SL relay communication with the receiving terminal through the relay terminal.

17. The transmitting terminal according to claim 16, wherein the instructions further cause the transmitting terminal to perform: releasing connection configuration between the transmitting terminal and the relay terminal when the connection configuration between the receiving terminal and the relay terminal has failed.

18. The transmitting terminal according to claim 16, wherein the connection configuration operation between the transmitting terminal and the relay terminal is performed when a base station indicates to enable the SL relay communication.

19. The transmitting terminal according to claim 16, wherein in the performing of the connection configuration operation with the relay terminal, the instructions further cause the transmitting terminal to perform:
performing a measurement operation on signals received from one or more neighboring terminals;
determining one neighboring terminal among the one or more neighboring terminals as the relay terminal based on a result of the measurement operation; and
configuring a connection with the relay terminal.

20. The transmitting terminal according to claim 16, wherein the connection configuration information includes at least one of an identifier of the relay terminal, information indicating that connection configuration between the transmitting terminal and the relay terminal has been completed, or a number for identifying data last transmitted by the transmitting terminal.
